(19) Europäisches Patentamt

European Patent Office

Office européen des brevets

(11) **EP 4 600 818 A1**

(12) **EUROPEAN PATENT APPLICATION**

(43) Date of publication:
**13.08.2025 Bulletin 2025/33**

(21) Application number: **24157087.8**

(22) Date of filing: **12.02.2024**

(51) International Patent Classification (IPC):
**G06F 9/48** *(2006.01)*

(52) Cooperative Patent Classification (CPC):
**G06F 9/4893**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Siemens Aktiengesellschaft
80333 München (DE)**

(72) Inventor: **Müller, Harald
82229 Seefeld-Hechendorf (DE)**

(74) Representative: **Siemens Patent Attorneys
Postfach 22 16 34
80506 München (DE)**

(54) **COMPUTER-IMPLEMENTED METHOD FOR SCHEDULING A PLURALITY OF COMPUTER INSTRUCTIONS FOR A TECHNICAL SYSTEM**

(57)    The invention relates to a computer-implemented method for scheduling a plurality of computer instructions for an energy-related technical system; comprising the steps a. providing the plurality of computer instructions (S1), wherein b. the computer instruction is a flexible computer instruction or a fixed computer instruction; wherein the flexible computer instruction is adjustable with regard to an energy-related feature; c. providing at least one pre-determined energy-related feature for each flexible computer instruction of the plurality of computer instructions (S2); d. providing at least one target energy-related feature for each flexible computer instruction of the plurality of computer instructions (S3); e. determining at least one energy-related feature for the plurality of computer instructions on the basis of the at least one pre-determined energy-related features and the at least one target energy-related features (S4); and f. scheduling each flexible computer instruction of the plurality of computer instructions depending on the associated at least one energy-related feature (S5).

Further, the invention relates to a corresponding computer program product and technical system.

FIG 1

S1 → S2 → S3 → S4 → S5

EP 4 600 818 A1

**Description**

1. Technical field

The present invention relates to a computer-implemented method for scheduling a plurality of computer instructions for a technical system. Further, the invention relates to a corresponding computer program product and technical system.

2. Prior art

Industrial applications usually consist of several dependent components (subsequently called workloads) that exchange data via interfaces. Such a modular system usually only works if all workloads and interfaces are working properly and if certain boundary conditions are met. The workloads and interfaces each have certain characteristics (e.g. compute complexity, memory requirements, data rate, call frequency). In addition, there may be additional constraints that need to be fulfilled so that the application can be considered fully functional (e.g. end-to-end latency, reaction times, availability of the application or parts of the application, privacy constraints for workloads or interfaces).

For industrial systems, the workloads usually run on different compute nodes in different domains. The compute nodes are interconnected by links and network nodes. The different compute nodes can be heterogeneous, i.e. they have different characteristics and capabilities (e.g. compute capacity, main memory capacity, storage capacity, CPU architecture). The links and network nodes can also have different characteristics and capabilities (e.g. band-width, latency, jitter).

A state-of-the art technology to implement modular software are so-called containers (like, e.g., "Docker"). Workloads can be packaged into containers, that can be run on a single or multiple container clusters. State-of-the-art technologies to manage multiple containers on a cluster are so-called container orchestration technologies (like, e.g., "Kubernetes"). Kubernetes comprises a scheduler that allocates so-called pods (which is a collection of containers) onto a set of nodes within a cluster.

In "Kubernetes" (and other container orchestration systems) the scheduler has several limitations:

- there is only a very simplistic application model, scheduling happens only based on pods and simple characteristics. There is no application model that describes the dependencies of the workloads and interfaces that form an application;

- the scheduler does not consider the exchange of data among application components;

- the scheduler does not consider additional constraints like latency requirements, availability requirements, privacy requirements;

- there is only a very simplistic infrastructure model, that consists of compute nodes and simple characteristics (like number of CPUs/cores, memory, CPU architecture labels);

- the scheduler does not consider networking characteristics between the compute nodes.

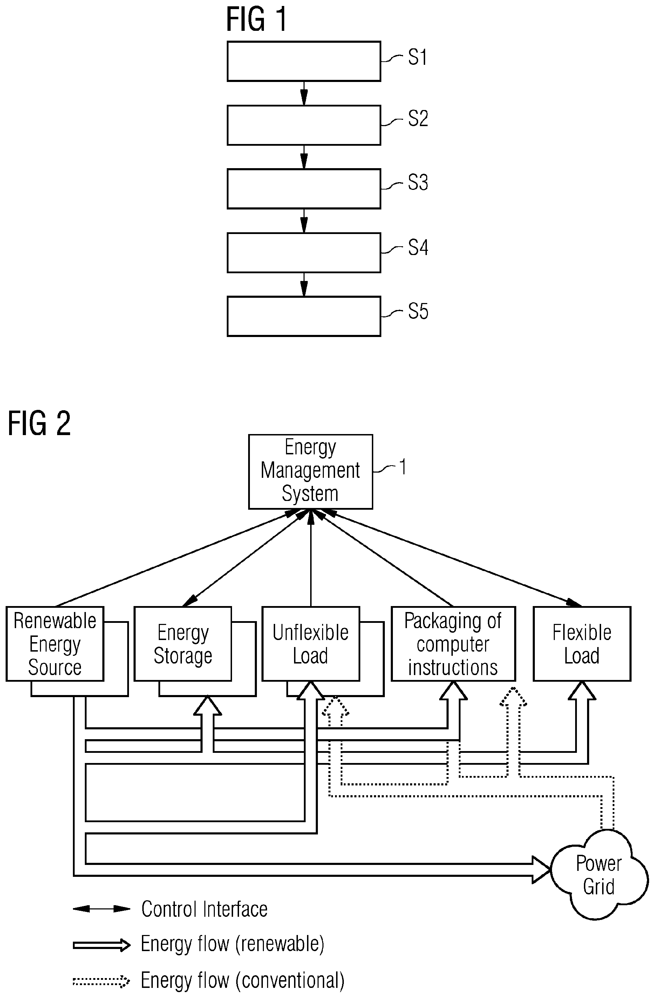

Moreover, usually a cluster (a collection of compute nodes) can be designed as a hybrid load (mixture of unflexible and flexible load) in an Energy Management System, as described in Figure 2. In prior art it remains a challenge to distinguish between computing instructions in e.g. a packaging of instructions that are flexible and those that are less flexible. The scheduler according to prior art insufficiently addresses the flexible loads during the scheduling. Accordingly, the computer instructions are scheduled irrespective of being flexible or being less flexible. This way, the execution of the computer instructions in the Energy Management System also does not consider the loads properly. For example, the energy-intensive computer instructions are inefficiently scheduled and executed. This prior art execution does not allow for controlling the execution of computer instructions by the Energy Management System based on the current availability and/or cost of Energy.

It is therefore an objective of the invention to provide a computer-implemented method for scheduling a plurality of computer instructions for a technical system, which is more efficient and reliable.

3. Summary of the invention

This problem is according to one aspect of the invention solved by a computer-implemented method for scheduling a plurality of computer instructions for an energy-related technical system; comprising the steps:

    a. providing the plurality of computer instructions; wherein

    b. the computer instruction is a flexible computer instruction or a fixed computer instruction; wherein the flexible computer instruction is adjustable with regard to an energy-related feature;

    c. providing at least one pre-determined energy-related feature for each flexible computer instruction of the plurality of computer instructions;

    d. providing at least one target energy-related feature for each flexible computer instruction of the plurality of computer instructions;

    e. determining at least one energy-related feature for the plurality of computer instructions on the basis of the at least one pre-determined energy-related feature and the at least one target energy-related feature; and

f. scheduling each flexible computer instruction of the plurality of computer instructions depending on the associated at least one energy-related feature.

Accordingly, the invention is directed to a computer-implemented method for scheduling a plurality of computer instructions for an energy-related technical system. In other words, the computer instructions are scheduled. The term "schedule" can be interpreted in the sense of deciding where to run a set of computer instructions, and in addition to control their execution in the sense of starting, pausing, resuming, throttling, and/or terminating stopping the compute instructions.

First, the input data is provided, namely the computer instructions and the energy-related feature. Preferably, the energy-related feature is a power consumption or an energy cost factor.

The computer instructions can be divided into flexible and fixed computer instructions. The computer instruction can be defined as any program code or compute task, such computer program code. Preferably, the computer instructions are packaged and executed as container e.g. using Kubernetes as container orchestration. The flexible computer instructions are flexible in the sense of adaptation, e.g. with regards to when the computer instructions are started, paused, resumed and/or how much compute power they consume. The flexible computer instructions are adjustable with regard to the energy-related feature. In other words, they can be adjusted in dependence of the energy-related feature, such as power consumption in a flexible manner. Moreover, they can be energy-intensive. The execution of the flexible computer instructions often makes a considerable difference in power consumption of the energy-related technical system. The flexible computer instructions can also allow for flexibility in terms of when they need to be executed and/or finished. They can be interrupted and resumed at a later point in time. To the contrary, the fixed computer instructions can be considered as less or even not flexible. The fixed computer instructions can be equally referred to as unflexible computer instructions.

In other words, a compute cluster (one or more data centers, a collection of compute nodes) are considered as a hybrid load, i.e. containing unflexible and flexible computer instructions.

The pre-determined energy-related feature can be estimated or measured. The target energy-related feature can be interpreted as specified target, which is important to instruct the flexible computer instructions to adjust their load to the target energy-related feature.

The input data can be received and/or transmitted via one or more input interfaces of a technical unit or technical system, wherein the technical unit can be designed as any computing unit. Additionally or alternatively, the output data in form of the scheduled flexible computer instructions can be sent via one or more output interfaces. This way, data can be efficiently transmitted between computing units reducing data traffic and allowing for bidirectional data exchange. The input data and/or output data can be extended with additional data or information.

The input data is provided or received as input for the scheduling. Each flexible computer instruction of the plurality of computer instructions is scheduled. The scheduling is performed in consideration of the at least one energy-related feature in contrast to prior art. The energy-related feature considers the at least one pre-determined energy-related feature and the at least one target energy-related feature.

The method according to the invention and hence scheduling can be triggered by a user request. The user can request to execute the computer instructions. Additionally or alternatively, the scheduling can be performed continuously or depending on an event. Additionally or alternatively, the scheduling can be performed in a control loop.

The advantage of the present invention is that a packaging of computer instructions can be treated as a flexible load controlled by an Energy Management System, being able to adapt the power consumption (or other energy-related feature), based on the target setting and monitoring of energy-related features of the overall system. This allows e.g. for reducing carbon footprint of data centers and/or reducing operations cost (according to estimations, data centers are responsible for up to 3% of global electricity consumption).

In an aspect the plurality of computer instructions is defined as a sequence or a packaging of executable computer instructions. Accordingly, the computer instructions can be executed on a computer or a computing unit in an efficient manner. Hence, the computer instructions can be scheduled and executed.

In an aspect the energy-related technical system is an Energy Management System. Accordingly, the technical system is configured for managing or controlling energy and hence electrical loads. Preferably, the energy management system is designed as demand response systems. The demand response system tries to control electrical loads within an energy system or defined energy domain (like e.g. a Microgrid, a building, a household or a factory) based on the (usually local) production of renewable energy.

In an aspect each flexible computer instruction comprises a range of the energy-related feature; wherein the range of the energy-related feature preferably comprises an upper and lower limit; and scheduling each flexible computer instruction of the plurality of computer instructions depending on the associated at least one energy-related feature within the range.

In an aspect the at least one pre-determined energy-related feature is a current energy-related feature or a future energy-related feature. Accordingly, the energy-related feature which is adapted, can refer to the current time point or the future time point. This advantageously allows for flexibility. The energy-related feature can be selected according to the specific use case, application, underlying technical system and/or other selection criteria.

In an aspect the plurality of computer instructions, the at least one pre-determined energy-related feature and/or the at least one target energy-related feature is transmitted via at least one input interface. Accordingly, data can be efficiently transmitted between computing units via interfaces.

In an aspect the at least one energy-related feature is defined as a difference between the at least one pre-determined energy-related feature and the at least one target energy-related feature.

In an aspect the according flexible computer instruction is scheduled in case that the at least one energy-related feature is positive.

In an aspect the according flexible computer instruction is not scheduled in case that the at least one energy-related feature becomes negative, preferably the according flexible computer instruction is removed from operation and put in a waiting queue.

Accordingly, the at least one energy-related feature is defined as the difference between the at least one pre-determined energy-related feature and the at least one target energy-related feature. The resulting value can be either positive or negative. The flexible computer instructions are solely scheduled if the values are positive and hence an excess is guaranteed. Hence, in case of power consumption, the power demand can also be interpreted as power excess.

In an aspect the at least one scheduled flexible computer instruction is a plurality of scheduled flexible computer instructions, and the instructions are managed depending on at least one strategy and/or at least one condition criterium. Accordingly, the scheduling step results in at least one scheduled flexible computer instruction. The plurality of scheduled flexible computer instructions is managed or processed. This way, the sequence or priority of the instructions can be adapted in a flexible and reliable manner.

In an aspect the at least one strategy is random sampling.

In an aspect the at least one condition criterium is a completion rate or a priority.

In an aspect the computer-implemented method further comprises scheduling the fixed computer instructions of the plurality of computer instructions. Accordingly, the fixed computer instructions do not undergo the adaptation. They are scheduled without processing or adaptation. In other words, the scheduling of the fixed computer instructions does not depend on any energy-related feature such as power demand. They are treated as a base load in the technical system and can be combined with flexible computer instructions.

A further aspect of the invention is a computer program product directly loadable into an internal memory of a computer, comprising software code portions for performing the steps according to any one of the preceding claims when said computer program product is running on a computer.

A further aspect of the invention is a technical system for performing the aforementioned computer-implemented method.

## 4. Short description of the drawings

In the following detailed description, presently preferred embodiments of the invention are further described with reference to the following figures:

Fig. 1    illustrates a flowchart of the computer-implemented method according to the invention.

Fig. 2    illustrates the technical system according to prior art.

Fig. 3    illustrates the technical system according to an embodiment.

## 5. Detailed description of preferred embodiments

Figure 1 illustrates a flowchart of the computer-implemented method according to the invention.

First, the plurality of computer instructions is provided S1. Thereby, the computer instruction 10, 20 is a flexible computer instruction 10 or a fixed computer instruction 20. The flexible computer instruction is adjustable with regard to an energy-related feature. In a second step, at least one pre-determined energy-related feature is provided for each flexible computer instruction of the plurality of computer instructions S2. In a next step, at least one target energy-related feature is provided for each flexible computer instruction of the plurality of computer instructions S3. At least one energy-related feature is determined on the basis of the at least one pre-determined energy-related feature and the at least one target energy-related feature S4. In the last step, each flexible computer instruction of the plurality of computer instructions is scheduled depending on the associated at least one energy-related feature S5.

Fig. 2 illustrates the technical system according to the prior art. The technical system is designed as common Demand Response systems, which tries to control the electrical loads within an energy system or defined energy domain (like e.g. a Microgrid, a building, a household or a factory) based on the production of renewable energy.

The technical system 1 collects diverse information, such as renewable power and the power consumption of the unflexible loads. The technical system 1 can additionally consider flexible loads. The packaging of computer instructions 10, 20 can be part of such a technical system 1, but it is treated as an unflexible load. The technical system 1 is configured to balance the total consumption in it's domain with the available amount of renewable energy.

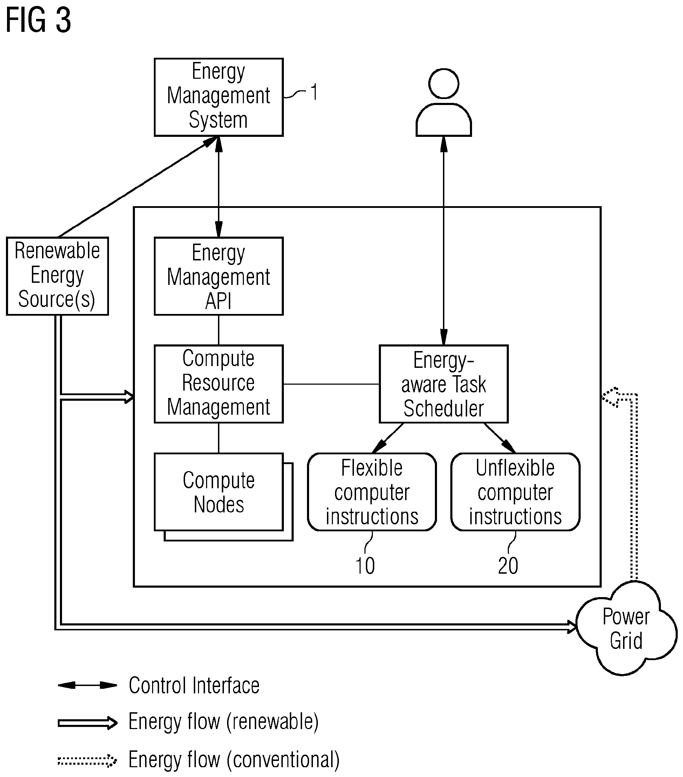

Fig. 3 illustrates the technical system according to an embodiment.

The Energy Management Application Programming Interface comprises the specific interface to the Energy Management System 1. The Energy Management Application Programming Interface sends the current power consumption of the plurality of computer instructions $P_{actual}^{Cluster}$ to the Energy Management System 1.

Additionally or alternatively, the Energy Management Application Programming Interface sends a prediction of the future power consumption of the plurality of computer instructions $P_{actual}^{Cluster}$ $(t > T_0)$ (t>T_0)(of non-controlled, unflexible computer instructions) to the Energy Management System 1.

The interface receives the target power consumption of the plurality of computer instructions $P_{target}^{Cluster}$ from the Energy Management System 1. The target power consumption instructs the plurality of computer instructions to adjust their load to the target power consumption. This is done by the Energy aware Task Scheduler, which controls the scheduling of the flexible computer instructions by starting, pausing, resuming, throttling and/or terminating them.

The packaging of the computer instructions 10, 20 according to the invention comprises a Compute Resource Management, which is typically already implemented in the plurality of computer instructions 10, 20. It has the task to manage the computing resources (e.g. total and currently available computing power, memory capacity and/or storage capacity of the computer instructions in the packaging).

The energy-related feature of the computer instructions is additionally managed. Therefore, the current energy-related features of the plurality of computer instructions are monitored. The target energy-related features can be received from the Energy Management API.

The scheduler receives the pre-determined energy-related features (e.g. the current power consumptions) and the target energy-related features for scheduling the computer instructions 10, 20.

According to an embodiment the scheduler receives the user requests from the users via the interface. The user requests can comprise an additional description, especially for flexible computer instructions. The description can comprise the range of the excess power demand e.g. in the form of describing the minimal required energy-related feature (request), and the maximum energy-related feature (limit), such as power excess.

The fixed computer instructions can be scheduled without any adaptation. The reason is that these computer instructions are unflexible and cannot be influenced. They are handled as unnegotiable and are usually executed directly.

The flexible computer instructions are scheduled in consideration of the pre-determined energy-related features and the target energy-related features. The difference between the energy-related features can be calculated as follows:

$$P_{excess}^{Cluster} = P_{target}^{Cluster} - P_{actual}^{Cluster}$$

Alternatively, the overall excess power $P_{excess}^{Cluster}$ can be assigned one or more specific computer instructions. This way, the management of the flexible computer instructions can be managed not on the cluster level but on compute node level. Hence, the compute nodes that are more energy efficient could be preferred over others, achieving higher overall energy efficiency of the packaging of the computer instructions.

The scheduler can ensure that the flexible computer instructions are solely scheduled and executed, in the case that enough excess power is available.

The scheduler can get updated whenever there is additional power available, or excess power is decreasing (and becoming negative) e.g. by means of a regular monitoring of the excess power resources.

Whenever the excess power is becoming negative, the flexible computer instructions can be removed from the operation and put back in the waiting queue. The flexible computer instructions can be signaled in that case. As a consequence, the flexible computer instructions get time to store intermediate results and/or the current state for later continuation. The flexible computer instructions can send a signal back when the backup is finished.

The scheduler can manage the sequence and/or the priority of starting and/or stopping of the flexible computer instructions. Thereby, distinct strategies can be applied, such as random, starting the highest completion rate first, terminating the lowest completion rate first to try to get jobs done (and out of the queue), e.g. based on priorities.

According to an embodiment, the scheduler can for example be implemented as declarative system. According to which, the users describe the target state of the computer instructions. The declarative scheduler is configured to transfer the technical system 1 to the declared target state whenever possible. The transfer is performed during the lifecycle of the computer instructions 10, 20. For example, the declarative scheduler will try to progress it back to its target state in the event that the computer instruction left its target state.

Typically, the declarative systems are implemented as control loops, such as Kubernetes. This means that a controller manages objects with a declared target state by continuously monitoring their state and implementing the actions to progress their state towards the target state.

The advantage of implementing the scheduler as declarative system is that the action is deemed to be very dynamic, as it has to react on fluctuating excess power. A declarative system already contains a target state (which is such that the flexible computer instruction should be executed and running), and a control loop that can deal with changes in the system and its state. Availability or non-availability of excess power can be dealt as changing system conditions (or resource availability), just as e.g. failure of Pods or worker nodes are dealt with in Kubernetes.

According to an embodiment, the excess power can be described as additional resource requirement of a Pod as part of an extended Pod specification.

According to an embodiment, a custom resource in Kubernetes can be generated for flexible computer instructions, which contains the additional requirements regarding excess power (besides other Pod spec for the task).

If the implementation is done using a custom resource, an associated controller for that custom resource will implement the handling of the flexible computer instruction, including all actions regarding starting, stopping, throttling the computer instruction according to the available excess power.

The energy-related feature can be the excess energy, excess power or energy cost could. The flexible computer instruction can get an energy cost limit for execution. The technical system can be enhanced in order to keep track of actual energy cost (which varies over time). Depending on the actual energy cost, the power consumption of flexible computer instructions, and their energy cost limits, the energy-aware scheduler decides at which point in time to execute the flexible computer instructions in the waiting queue.

**Claims**

1. Computer-implemented method for scheduling a plurality of computer instructions for an energy-related technical system (1); comprising the steps:

   a. providing the plurality of computer instructions (10,20) (S1); wherein.
   b. the computer instruction (10, 20) is a flexible computer instruction (10) or a fixed computer instruction (20); wherein.
   the flexible computer instruction (10) is adjustable with regard to an energy-related feature.
   c. providing at least one pre-determined energy-related feature for each flexible computer instruction (10) of the plurality of computer instructions (10, 20) (S2);
   d. providing at least one target energy-related feature for each flexible computer instruction (10) of the plurality of computer instructions (S3);
   e. determining at least one energy-related feature for the plurality of computer instructions (10, 20) on the basis of the at least one pre-determined energy-related feature and the at least one target energy-related feature (S4); and
   f. scheduling each flexible computer instruction (10) of the plurality of computer instructions (10, 20) depending on the associated at least one energy-related feature (S5).

2. Computer-implemented method according to claim 1, wherein the plurality of computer instructions (10, 20) is defined as a sequence or a packaging of executable computer instructions.

3. Computer-implemented method according to claim 1 or claim 2, wherein the technical system (1) is an Energy Management System.

4. Computer-implemented method according to any of the preceding claims, wherein each flexible computer instruction (10) comprises a range of the energy-related feature; wherein the range of the energy-related feature preferably comprises an upper and a lower limit; and scheduling each flexible computer instruction (10) of the plurality of computer instructions (10, 20) depending on the associated at least one energy-related feature within the range.

5. Computer-implemented method according to any of the preceding claims, wherein the at least one pre-determined energy-related feature is a current energy-related feature or a future energy-related feature.

6. Computer-implemented method according to any of the preceding claims, wherein the plurality of computer instructions (10, 20), the at least one pre-determined energy-related feature and/or the at least one target energy-related feature are transmitted via at least one input interface.

7. Computer-implemented method according to any of the preceding claims, wherein the at least one energy-related feature is defined as a difference between the at least one pre-determined energy-related feature and the at least one target energy-related feature.

8. Computer-implemented method according claim 7, wherein the according flexible computer instruction (10) is scheduled in case that the at least one energy-related feature is positive.

9. Computer-implemented method according claim 7 or claim 8, wherein the according flexible computer instruction (10) is not scheduled in case that the at least one energy-related feature becomes negative, preferably the according flexible computer instruction (10) is removed from operation and put in a waiting queue.

10. Computer-implemented method according to any of the preceding claims, wherein the at least one scheduled flexible computer instruction (10) is a sequence or a packaging of scheduled flexible computer instructions (10) and the sequence or the packaging is managed depending on at least one strategy and/or at least one condition criterium.

11. Computer-implemented method according to claim 10, wherein the at least one strategy is random sampling.

12. Computer-implemented method according to claim 10, wherein the at least one condition criterium is a completion rate or a priority.

13. Computer-implemented method according to any of the preceding claims, further comprising scheduling the fixed computer instructions (10) of the plurality of computer instructions (10, 20).

14. A computer program product directly loadable into an internal memory of a computer, comprising software code portions for performing the steps according to any one of the preceding claims when said computer program product is running in a computer.

15. Technical system (1) for performing the method according to claims 1 - 13, wherein the technical system is preferably a declarative technical system.

# FIG 1

S1

S2

S3

S4

S5

# FIG 2

Energy Management System — 1

| Renewable Energy Source | Energy Storage | Unflexible Load | Packaging of computer instructions | Flexible Load |

Power Grid

→ Control Interface

⇒ Energy flow (renewable)

⇢ Energy flow (conventional)

FIG 3

Energy Management System — 1

Renewable Energy Source(s)

Energy Management API

Compute Resource Management

Compute Nodes

Energy-aware Task Scheduler

Flexible computer instructions
10

Unflexible computer instructions
20

Power Grid

Control Interface

Energy flow (renewable)

Energy flow (conventional)

Europäisches
Patentamt

European
Patent Office

Office européen
des brevets

# EUROPEAN SEARCH REPORT

**Application Number**

EP 24 15 7087

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Singh Parul ET AL: "Sustainability in Computing - Energy Efficient Placement of Kubernetes Workloads", , 4 February 2023 (2023-02-04), pages 1-35, XP093174757, Retrieved from the Internet: URL:https://archive.fosdem.org/2023/schedule/event/energy_scheduling_kubernetes/attachments/slides/5353/export/events/attachments/energy_scheduling_kubernetes/slides/5353/FOSDEM_2023.pdf [retrieved on 2024-06-13] * These are the slides accompaniying the video presentation of D2. D1 and D2 are considered together as being one document (the slides appear also in the video from D2). * ----- | 1-15 | INV. G06F9/48 |
| X | Singh Parul ET AL: "FOSDEM 2023 - Carbon Intensity Aware Scheduling in Kubernetes", , 4 February 2023 (2023-02-04), pages 1-3, XP093174762, Retrieved from the Internet: URL:https://archive.fosdem.org/2023/schedule/event/energy_scheduling_kubernetes/ [retrieved on 2024-06-13] * The most relevant part is the video present on page 1 (see the URL). Shows the date of publication of D1. Also of particular interest is the demo starting from the 15:00 mark which shows the implementation used CRDs and custom controllers in Kubernetes. * ----- -/-- | 1-15 | TECHNICAL FIELDS SEARCHED (IPC) G06F |

The present search report has been drawn up for all claims

| Place of search | Date of completion of the search | Examiner |
|---|---|---|
| The Hague | 13 June 2024 | Alecu, Mihail |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

## EUROPEAN SEARCH REPORT

Application Number

EP 24 15 7087

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Anonymous: "GitHub - Azure/carbon-aware-keda-operator", , 1 January 2023 (2023-01-01), pages 1-5, XP093174132, Retrieved from the Internet: URL:https://github.com/Azure/carbon-aware-keda-operator [retrieved on 2024-06-13] * the whole document * | 1-15 | |
| A | TURIN GIANLUCA ET AL: "Predicting resource consumption of Kubernetes container systems using resource models", JOURNAL OF SYSTEMS & SOFTWARE, ELSEVIER NORTH HOLLAND, NEW YORK, NY, US, vol. 203, 13 May 2023 (2023-05-13), XP087337205, ISSN: 0164-1212, DOI: 10.1016/J.JSS.2023.111750 [retrieved on 2023-05-13] * the whole document * | 1-15 | |

TECHNICAL FIELDS
SEARCHED (IPC)

The present search report has been drawn up for all claims

| Place of search | Date of completion of the search | Examiner |
|---|---|---|
| The Hague | 13 June 2024 | Alecu, Mihail |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)